# EUROPÄISCHE PATENTSCHRIFT

(11) **EP 0 499 187 B1**
(45) Veröffentlichungstag und Bekanntmachung des Hinweises auf die Patenterteilung: **09.08.1995**
(21) Anmeldenummer: 92102212.5
(22) Anmeldetag: 10.02.1992
(51) Int. Cl.: A61C 17/06

(54) **Ventilanordnung in einer zahnärztlichen Absauganlage**
Valve assembly for a dental evacuation system
Raccord d'obturation pour un système d'aspiration dentaire

(30) Priorität: 14.02.1991 DE 4104593
(43) Veröffentlichungstag der Anmeldung: 19.08.1992
(73) Patentinhaber: SIEMENS AKTIENGESELLSCHAFT, 80333 München (DE)
(72) Erfinder: Frey, Peter, Dipl.-Ing. (FH), W-6710 Frankenthal (DE); Kratochwilla, Hans-Michael, W-6143 Lorsch (DE)

(56) Entgegenhaltungen:
- EP-A- 0 406 635
- DE-U- 8 904 379
- US-A- 4 307 475
- US-A- 4 580 978

## Beschreibung

Bei zahnärztlichen Absauganlagen besteht die Forderung, im Absauggut enthaltene feste Partikel, wie Amalgam oder Gold, die aus Gründen des Schutzes der Umwelt und der Rohstoffe nicht in das öffentliche Abwassernetz gelangen dürfen, mit sehr hohem Abscheidegrad (über 95 %) aus dem Abwasser auszuscheiden und in separaten Behältnissen aufzufangen. Hierzu haben sich Zentrifugenabscheider besonders gut bewährt. Ein solcher Zentrifugenabscheider ist beispielsweise in der EP-0 290 745 beschrieben.

Um sicherzustellen, daß bei abgeschalteter Absauganlage bzw. bei nicht aktiviertem Zentrifugenabscheider kein Abwasser unkontrolliert, d.h. ohne Meldung, in das Abwassernetz gelangt, wurde bereits vorgeschlagen, in die Abwasserleitung ein Ventil mit einem Wassermelder vorzusehen (DE-U-8 904 379). Der Wassermelder schaltet den Zentrifugenabscheider bei Wasseranfall ein, jedoch nur, wenn die gesamte Absauganlage bzw. das zahnärztliche Behandlungsgerät, an dem die Absauganlage angeschlossen ist, mit Strom versorgt ist. Der Wassermelder verhindert nicht die Einleitung der Flüssigkeit bei Betriebsstörungen, insbesondere nicht bei Stromausfällen oder bei blockiertem oder überfülltem Zentrifugenabscheider. Auch nach Abschalten der Stromzufuhr am Behandlungsgerät besteht die Gefahr, daß über offene Abwasserquellen, wie Speischale oder Überlauf einer Mundspülglas-Füllvorrichtung, unkontrolliert Wasser in den ruhenden Zentrifugenabscheider gelangen und dort im Abscheidebereich bereits angesammelte Partikel ablösen kann, die dann in das Abflußnetz gespült werden. Eine solche unkontrollierte Wasserzufuhr kann in der zahnärztlichen Praxis beispielsweise dann gegeben sein, wenn nach Abschalten des Behandlungsgerätes vom Reinigungspersonal Flüssigkeit über die Speischale eingefüllt oder ein volles Mundspülglas in die Speischale bzw. in den Überlauf der Mundspülglas-Füllvorrichtung gekippt wird.

Aus der EP-0 406 635 ist es zwar bekannt, bei einer Speischalenanordnung für einen zahnärztlichen Arbeitsplatz in die Abwasserleitung zwischen Speischale und einer Abscheidevorrichtung für Amalgam ein elektromagnetisch betätigbares Servoventil anzuordnen, welches durch einen stromauf des Servoventils in der Abwasserleitung angeordneten Fühler gesteuert wird, wobei das Servoventil normalerweise geschlossen ist und dann erst geöffnet wird, wenn die vor dem Servoventil anstehende Wassersäule einen vorgegebenen Wert erreicht. Die dort vorgestellten Ausführungsformen sind jedoch relativ aufwendig, insbesondere hinsichtlich der Anordnung, Ausbildung und Betätigung des Verschlußorgans.

Der im Anspruch 1 angegebenen Erfindung liegt die Aufgabe zugrunde, demgegenüber eine Verbesserung zu erzielen und eine Ventilanordnung anzugeben, mit der mit konstruktiv einfacheren Mitteln sichergestellt werden kann, daß bei abgeschalteter Anlage und auch bei Betriebsstörungen, keine Partikel bzw. kein mit Partikeln versehenes Abwasser unkontrolliert, d.h. ohne vorangegangene Separierung, in das Abflußnetz gelangen kann.

Die erfindungsgemäß vorgeschlagene Ventilanordnung ist konstruktiv einfach und betriebssicher, insbesondere wenn als Verschlußorgan eine außerhalb der Kammer kippbar gelagerte und auch von dort betätigbare Verschlußklappe vorgesehen ist, die gegenüber axial geführten Sitz- oder Schiebeventilen Vorteile hat.

Die Vorteile einer Verwendung von sogenannten Shape-Memory-Stellelementen sind unter anderem, daß solche Stellelemente einen relativ kleinen Platzbedarf benötigen und einen geringen Aufwand an Mechanik erfordern. Außerdem treten keine mechanischen Geräusche auf. Ein weiterer Vorteil ist darin zu sehen, daß sich eine sehr günstige Kraft-Weg-Kennlinie mit relativ hoher Kraft zu Beginn der Öffnungsphase des Verschlußorganes ergibt.

Weitere Vorteile ergeben sich aus der nachfolgenden Beschreibung eines Ausführungsbeispieles. Es zeigen:
Figur 1 ein vereinfachtes hydraulisches Schaltbild einer zahnärztlichen Absauganlage,
Figur 2 eine vereinfachte Darstellung der erfindungsgemäßen Ventilanordnung,
Figuren 3 bis 5 eine erste konstruktive Ausführung der erfindungsgemäßen Ventilanordnung in verschiedenen Schnitten,

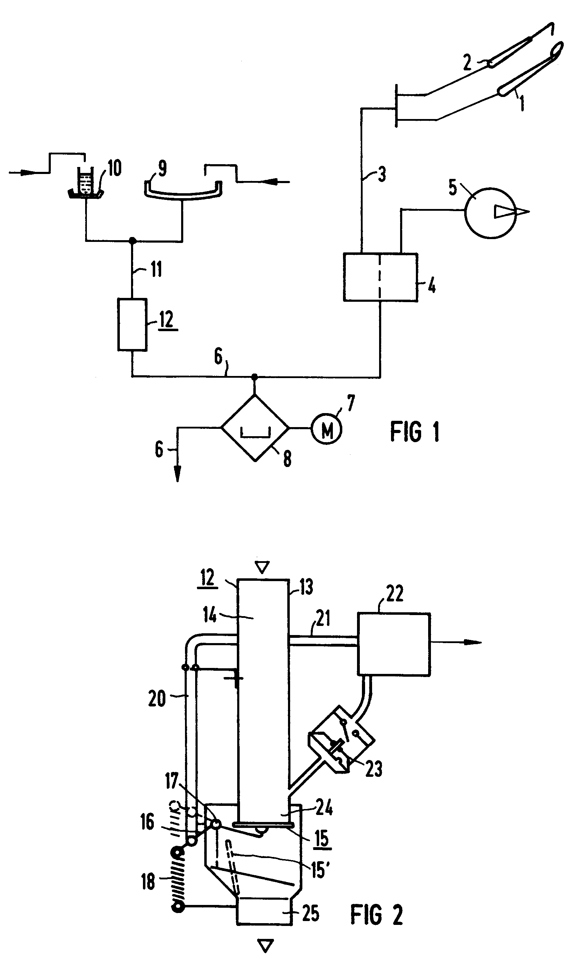

Die Figur 1 zeigt in einer schematischen Darstellung ein hydraulisches Schaltbild einer zahnärztlichen Absauganlage für mehrere Abwasserquellen, die über diverse Leitungen mit einem zentralen Abfluß verbunden sind. Im Bild rechts sind ein Saughandstück 1 sowie ein Speichelsauger 2 dargestellt, die über eine Abwasserleitung 3 mit einer Separiereinrichtung 4 verbunden sind, an die ein Unterdruckerzeuger 5 angeschlossen ist. Der Ausgang der Separiereinrichtung 4 ist mit einer in das öffentliche Abflußnetz führenden Abwasserleitung 6 verbunden, in die in bekannter Weise ein von einem Motor 7 angetriebener Zentrifugenabscheider zwischengeschaltet ist. Im Bild links sind zwei weitere Abwasserquellen dargestellt, eine Speischale 9 sowie der Überlauf einer Mundspülglas-Fülleinrichtung 10, deren Abwasser über eine Leitung 11 einer Ventilanordnung 12 zugeführt wird. Aufbau und Funktion dieser Ventilanordnung werden anhand der nachfolgenden Figuren noch näher erläutert. Der Ausgang der Ventilanordnung 12 ist mit der Abwasserleitung 6 verbunden, die in den Zentrifugenabscheider 8 mündet. Im Zentrifugenabscheider 8 werden in bekannter Weise Festkörperteile, insbesondere Amalgam und Gold, vom Abwasser getrennt. Das von diesen Partikeln getrennte Abwasser wird sodann in das öffentliche Abflußnetz geleitet.

Weitere Einzelheiten eines solchen Zentrifugenabscheiders sind beispielsweise der eingangs bereits genannten europäischen Patentschrift 0 290 745 entnehmbar.

Die Ventilanordnung 12 enthält ein senkrecht stehendes rohrförmiges Gehäuse 13, welches eine Durchflußkammer 14 bildet, in die die Flüssigkeit aus den Abwasserquellen 9 und 10 eingeleitet wird. Am unteren Ende der Durchflußkammer 14 ist ein Verschlußorgan 15 angeordnet, welches über eine Kippmechanik 16 um eine Achse 17 kippbar ist und mit Hilfe einer Zugfeder 18 in der dargestellten Schließstellung gehalten wird. An der Kippmechanik 16 greift ein später noch näher erläutertes Stellelement 20 an, welches über eine elektrische Leitung 21 mit einem Steuergerät 22 verbunden ist. Mit der Durchflußkammer 14 in Verbindung steht ein Druckschalter 23, welcher bei einem bestimmten Flüssigkeitsstand in der Kammer 14 ein elektrisches Signal an das Steuergerät 22 abgibt. Mit Hilfe des Steuergerätes 22 werden dann sowohl das Stellelement 20 als auch der Zentrifugenabscheider 8 aktiviert.

Das Stellelement 20 ist ein Shape-Memory-Stellelement, welches auf einer temperaturabhängigen Gestaltsänderung bestimmter Metallegierungen basiert. Im vorliegenden Anwendungsfall kommt ein Shape-Memory-Stellelement mit Zweiwegeffekt zur Anwendung, bei dem durch Erwärmung des Elements eine Formänderung und bei Abkühlung eine Rückkehr in die ursprüngliche Form erreicht wird.

Im Ruhezustand verschließt das Verschlußorgan 15 die Auslaßöffnung 24 der Durchflußkammer 14 so, daß von der Speischale 9 und/oder der Mundspülglas-Fülleinrichtung 10 über die Leitung 11 in die Kammer einfließendes Abwasser angestaut wird. Die hierzu notwendige Schließkraft erzeugt die Zugfeder 18, die mit einem entsprechenden Hebelarm an der Mechanik 16 so eingehängt ist, daß die notwendige Zugkraft auf das Schließorgan 15 übertragen wird. Wird Wasser unkontrolliert in die Kammer 14 eingeleitet, entsteht dort eine Wassersäule, deren Druck auf den Druckschalter 23 wirkt. Ist der am Druckschalter 23 eingestellte Druck erreicht, wird ein elektrisches Signal freigegeben, mit dem über das Steuergerät 22 das Shape-Memory-Stellelement 20 aktiviert wird, indem es aus einer nicht dargestellten Spannungsquelle von Strom durchflossen wird. Durch die dabei entstehende Wärme verkürzt sich das Stellelement, wodurch die Ventilklappe 15 entgegen der Kraft der Feder 18 aus der Schließstellung in die gestrichelt eingezeichnete geöffnete Stellung gebracht wird. Das in der Kammer 14 angestaute Wasser kann sodann über den Abflußstutzen 25 in die Leitung 6 und damit in den Zentrifugenabscheider 9 fließen. Nach Abfließen des Wassers fällt der Druck am Druckschalter 23 ab, wodurch der Stromfluß im Stellelement 20 unterbrochen wird. Mit zunehmender Abkühlung nimmt das Shape-Memory-Stellelement seine ursprüngliche Länge wieder an. Die Zugfeder 18 bringt die Ventilklappe 15 sodann wieder in die Ruhelage, wodurch die Abflußöffnung wieder verschlossen wird.

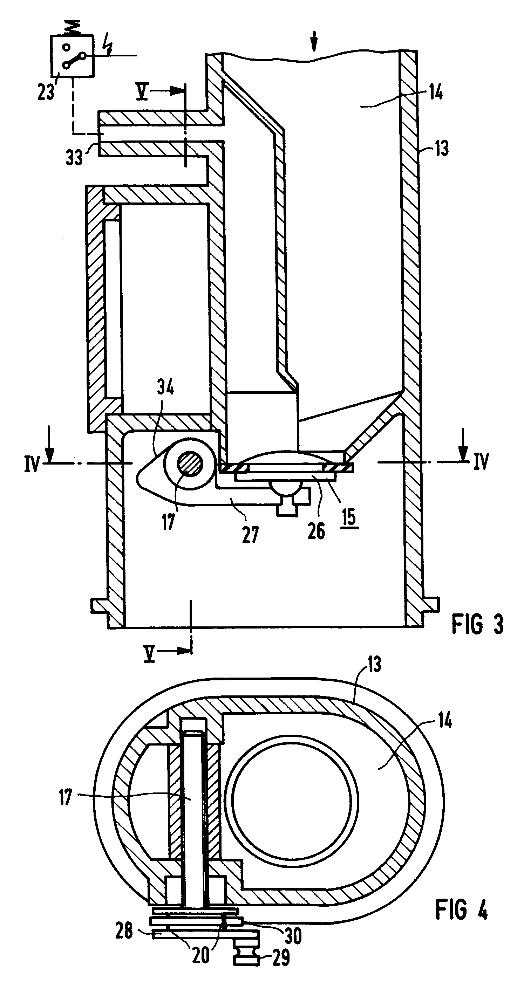

Die Figur 3 zeigt eine konstruktive Ausführungsform der in Figur 2 im Prinzip dargestellten Ventilanordnung.

Die Verschlußklappe 15 besteht aus einem Absperrteller 26, der mittels einer Schnappverbindung an einem Kipphebel 27 gehaltert ist, wobei zwischen Absperrteller und Kipphebel ein Kugelgelenk vorgesehen ist, welches eventuelle Achstoleranzen ausgleicht und somit eine genaue Abdichtung der Auslaßöffnung 24 gewährleistet.

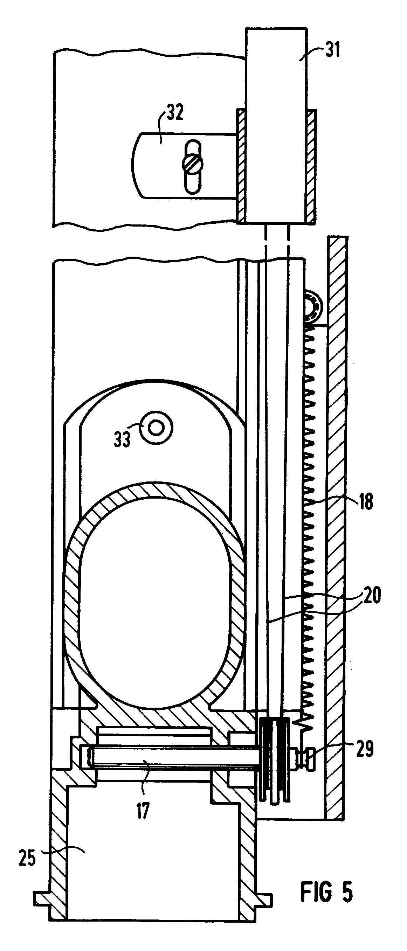

Die aus dem Gehäuse 13 herausgeführte Achse 17 enthält am einen Ende eine Rolle 28, an der exzentrisch ein Stift 29 vorsteht, an dem das eine Ende der Zugfeder 18 eingehängt ist, deren anderes Ende am Gehäuse 13 angreift (sh. Figuren 4 und 5).

Das Shape-Memory-Stellelement 20 wird gebildet durch einen Ni-Ti-Draht von etwa 0,2 mm Durchmesser, der eine Schleife bildet, welche an einem am Umfang der Rolle 28 befindlichen Haken 30 eingehängt ist. Die Drahtschleife läuft über den halben Umfang der Rolle; die beiden freien Enden sind mittels einer Quetschverbindung an einem Stecker 31 befestigt, der wiederum an einem axial verstellbar am Gehäuse 13 gehalterten Halteteil 32 befestigt ist. Das Stellelement läßt sich so genau justieren. Die Leitungsenden des Ni-Ti-Drahtes sind, wie bereits erwähnt, über die elektrische Leitung 21 mit dem Steuergerät 22 verbunden. Fließt Strom durch den Memory-Draht, so wird dieser aufgrund seines elektrischen Widerstandes erhitzt, wodurch er sich um ein vorgegebenes Maß verkürzt. Infolge der Hebelwirkung, die durch die Drahtführung an der Rolle 28 gegeben ist, wird die Verschlußklappe 15 um die Achse 17 gedreht und damit geöffnet.

Nach dem Abfließen des Wassers fällt der Druck am Druckschalter 23, der an einem Anschlußstutzen 33 des Gehäuses angeschlossen ist, wieder ab, wodurch der Stromfluß im Memory-Draht unterbrochen wird. Der Memory-Draht kühlt sich sodann ab und nimmt seine ursprüngliche Länge wieder an. Die Zugfeder 18 bringt die Verschlußklappe 15 anschließend in die Ruhelage zurück, wodurch der Abfluß wieder verschlossen wird.

Der Öffnungswinkel der Verschlußklappe 15 ist durch einen Anschlag 34 (Figur 3) auf 60° begrenzt, wodurch ein genügend großes Klappenrückstellmoment zur Verfügung steht, welches zur Überwindung der Lage und der Dichtreibung an der Klappenachse notwendig ist.

Die Schließfeder 18, die exzentrisch an der Klappenachse 17 eingehängt ist, ist so dimensioniert, daß ein ausreichend großes Moment auf die Achse übertragen wird, um die Dichtung der Verschlußklappe ausreichend stark gegen die Auslaßöffnung anzupressen und so ein Durchfließen von Wasser zu vermeiden.

Damit beim Öffnen der Klappe der Memory-Draht entlastet wird, ist eine Zugfeder mit relativ flacher Kennlinie verwendet. Nachdem das Moment auf die Achse 17 mit steigendem Öffnungswinkel abnimmt, ist nur ein Bruchteil der Anfangszugkraft als Drahthaltekraft erforderlich.

Der Drahtdurchmesser für das Shape-Memory-Stellelement ist so ausgelegt, daß zum einen die notwendige Kraft für eine Öffnung der Klappe aufgebracht wird und zum anderen die Reaktionszeit kurz genug ist, um ein schnelles Abfließen des angestauten Wassers zu ermöglichen. Die Befestigung der Drahtenden im Stecker 31 mittels Quetschverbindung erweist sich als gute Möglichkeit, die notwendigen Zugkräfte zu übertragen und die elektrische Verbindung zwischen Verankerung und Draht herzustellen. Die verstellbare Halterung des Steckers 31 ermöglicht eine genaue Justierung zwischen Stecker und Rolle 28, wodurch Toleranzen in den Drahtlängen ausgeglichen werden können.

## Patentansprüche

1. In die Abwasserleitung (1) einer zahnärztlichen Absauganlage einzusetzende Ventilanordnung (12), enthaltend eine Durchflußkammer (14) für das Abwasser, ein Verschlußorgan (15) am Auslaß der Kammer, welches mit Hilfe von Schließmitteln (18) aus einer die Auslaßöffnung freigebenden Stellung in eine die Öffnung verschließende Stellung bringbar ist, sowie den Füllstand in der Kammer (14) in der Schließstellung erfassende Sensormittel (23), welche ein Steuersignal zur Aktivierung einer die Flüssigkeit in die Abwasserleitung (6) des Abflußnetzes abführenden Fördereinrichtung (7, 8) erzeugen, wobei die Schließmittel (18) das Verschlußorgan (15) unabhängig vom Füllstand in der Kammer (14) so lange in Schließstellung halten, bis von den Sensormitteln (23) gesteuerte, das Verschlußorgan (15) öffnende Stellmittel (20) ein Aktivierungssignal erhalten, **dadurch gekennzeichnet,** daß als Stellmittel ein Shape-Memory-Stellelement mit Zweiwegeeffekt vorgesehen ist.

2. Ventilanordnung nach Anspruch 1, **dadurch gekennzeichnet,** daß als Shape-Memory-Stellelement ein Zugdraht (20) verwendet ist.

3. Ventilanordnung nach Anspruch 2, **dadurch gekennzeichnet,** daß ein direkt beheizbarer Zugdraht (20) verwendet ist.

4. Ventilanordnung nach Anspruch 3, **dadurch gekennzeichnet,** daß der Zugdraht (20) eine Schleife bildet, die an einem einen Hebelarm bildenden Teil (28) einer Verschlußklappenachse (17) eingehängt ist und die beiden Enden des Zugdrahtes in einem Stecker (31) gefaßt sind, der über eine elektrische Leitung (21) mit einem von den Sensormitteln (23) aktivierbaren Steuergerät (22) verbunden ist, welches bei Aktivierung den Draht mit dem für eine Erwärmung im Sinne einer Längenänderung des Drahtes erforderlichen Strom versorgt.

5. Ventilanordnung nach Anspruch 4, **dadurch gekennzeichnet,** daß die Drahtenden in dem Stecker (31) durch Quetschen gehaltert sind.

6. Ventilanordnung nach Anspruch 4, **dadurch gekennzeichnet,** daß der Stecker (31) mittels eines verstellbaren Halteteils (32) am Gehäuse (13) der Kammer (14) befestigt ist.

7. Ventilanordnung nach einem der Ansprüche 1 bis 6, **dadurch gekennzeichnet,** daß als Verschlußorgan eine von außerhalb der Kammer (14) betätigbare Verschlußklappe (15) vorgesehen ist.

8. Ventilanordnung nach Anspruch 7, **dadurch gekennzeichnet,** daß die Verschlußklappe (15) einen an einem Kipphebel (27) mittels Kugelgelenk beweglich gehalterten Absperrteller (26) enthält.

9. Ventilanordnung nach Anspruchs 8, **dadurch gekennzeichnet,** daß exzentrisch zur Verschlußklappenachse (17) an dieser eine die Schließkraft erzeugende Feder (18) angreift.

10. Ventilanordnung nach einem der Ansprüche 7 bis 9, **dadurch gekennzeichnet,** daß der Öffnungswinkel der Verschlußklappe (15) durch einen Anschlag (34) auf 60° begrenzt ist.

## Claims

1. Valve arrangement (12) to be inserted into the water outlet (1) [sic] of a dental suction system, containing a flow chamber (14) for the waste water, a sealing part (15) at the outlet of the chamber, which with the aid of closing means (18) can be brought out of a position which releases the outlet opening, into a position which closes the opening, and containing sensor means (23) detecting the level in the chamber (14) in the closed position, which sensor means generate a control signal to activate a conveyor device (7, 8) carrying the liquid away into the water outlet (6) of the drain system, whereby the closing means (18) keep the sealing part (15) in the closed position independently of the level in the chamber (14) until adjusting means (20), controlled by the sensor means (23) and opening the sealing part (15), receive an activation signal, characterized in that a shape memory adjusting element with double-way effect is provided as adjusting means.

2. Valve arrangement according to claim 1, characterized in that a transmission wire (20) is used as shape memory adjusting element.

3. Valve arrangement according to claim 2, characterized in that a transmission wire (20) which can be heated directly is used.

4. Valve arrangement according to claim 3, characterized in that the transmission wire (20) forms a loop which is hung on a part (28) of a shutter shaft (17) forming a lever arm and the two ends of the transmission wire are held in a connector (31) which is connected by way of an electric line (21) to a control device (22) which can be activated by the sensor means (23), which device, upon activation, supplies the wire with the current necessary for a heating-up in the sense of a length change of the wire.

5. Valve arrangement according to claim 4, characterized in that the wire ends are supported in the connector (31) by way of pinching.

6. Valve arrangement according to claim 4, characterized in that the connector (31) is fastened by means of an adjustable holding part (32) to the housing (13) of the chamber (14).

7. Valve arrangement according to one of claims 1 to 6, characterized in that a shutter (15) which can be operated from outside the chamber (14) is provided as sealing part.

8. Valve arrangement according to claim 7, characterized in that the shutter (15) contains a stop plate (26) which is supported in a moveable manner on a tipping lever (27) by means of a spherical joint.

9. Valve arrangement according to claim 8, characterized in that eccentrically to the shutter shaft (17) a spring (18) generating the closing force engages thereon.

10. Valve arrangement according to one of claims 7 to 9, characterized in that the opening angle of the shutter (15) is limited to 60° by a stop (34).

## Revendications

1. Dispositif de soupape (12) destiné à être inséré dans la canalisation d'évacuation d'eaux usées (1) d'une installation d'aspiration dentaire, contenant une chambre de passage (14) pour des eaux usées, un organe d'obturation (15) monté sur la sortie de la chambre et qui peut être déplacé, à l'aide des moyens de fermeture (18), depuis une position libérant l'ouverture de sortie, dans une position fermant l'ouverture, ainsi que des moyens de détection (23) détectant le niveau de remplissage dans la chambre (14), dans la position fermée, et qui produisent un signal pour activer un dispositif d'entraînement (7, 8) évacuant le liquide situé dans la canalisation des eaux usées (6) du réseau d'évacuation des eaux usées, les moyens de fermeture (18) maintenant l'organe d'obturation (15) dans la position fermée, indépendamment du niveau de remplissage dans la chambre (14), jusqu'à ce que des moyens de réglage (20), qui sont commandés par les moyens de détection (23) et ouvrent l'organe d'obturation (15), reçoivent un signal d'activation, caractérisé par le fait que sont prévus, comme moyens de réglage, un élément de réglage shape-memory, c'est-à-dire à mémoire de forme, à effet bidirectionnel.

2. Dispositif de soupape suivant la revendication 1, caractérisé par le fait qu'on utilise un fil de traction (20) comme élément de réglage shape-memory.

3. Dispositif de soupape suivant la revendication 2, caractérisé par le fait qu'on utilise un fil de traction (20) pouvant être chauffé directement.

4. Dispositif de soupape suivant la revendication 3, caractérisé par le fait que le fil de traction (20) forme une boucle qui est accrochée à une partie (28), constituant un bras de levier, d'un axe (17) de clapet de fermeture, et que les deux extrémités du fil de traction sont serrées dans un connecteur (31), qui est relié, par l'intermédiaire d'une ligne électrique (21), à un appareil de commande (22) pouvant être activé par des moyens de détection (23) et qui, lors de l'activation, alimente le fil avec le courant nécessaire pour un échauffement, dans le sens d'une variation de la longueur du fil.

5. Dispositif de soupape suivant la revendication 4, caractérisé par le fait que les extrémités du fil sont maintenues dans le connecteur (31) par pincement.

6. Dispositif de soupape suivant la revendication 4, caractérisé par le fait que le connecteur (31) est fixé au moyen d'un élément de retenue réglable (32), sur le boîtier (13) de la chambre (14).

7. Dispositif de soupape suivant l'une des revendications 1 à 6, caractérisé par le fait qu'il est prévu, comme organe d'obturation, un clapet de fermeture (15) pouvant être actionné de l'extérieur de la chambre (14).

8. Dispositif de soupape suivant la revendication 7, caractérisé par le fait que le clapet de fermeture (15) contient un disque de sectionnement (26) retenu sur un levier basculant (27) de manière à être mobile au moyen d'une articulation sphérique.

9. Dispositif de soupape suivant la revendication 8, caractérisé par le fait qu'un ressort (18), qui produit la force de fermeture, s'accroche à l'axe (17) du clapet de fermeture d'une manière excentrée par rapport à cet axe.

10. Dispositif de soupape suivant l'une des revendications 7 à 9, caractérisé par le fait que l'angle d'ouverture du clapet de fermeture (15) est limité à 60° par une butée (34).
